# EUROPEAN PATENT APPLICATION

(11) **EP 1 371 884 A2**
(43) Date of publication of application: **17.12.2003**
(21) Application number: 03011032.4
(22) Date of filing: 19.05.2003
(51) Int. Cl.: F16J 15/08

(54) **Sealing bead**

(30) Priority: 12.06.2002 JP 2002170903
(71) Applicant: Ishino Gasket Mfg. Co. Ltd., Shinagawa-ku, Tokyo (JP)
(72) Inventor: Matsuki, Nobutake, Odawara-shi, Kanagawa (JP); Funatsu, Tomonori, Odawara-shi, Kanagawa (JP); Osawa, Namieki, Odawara-shi, Kanagawa (JP); Katou, Eizi, Odawara-shi, Kanagawa (JP)
(74) Representative: Schwabe - Sandmair - Marx

(57) **Abstract**

The present invention provides a sealing bead (2) in which linearly acting surface pressures are generated at its portions which does not directly contribute to generating the linearly acting surface pressures in the conventional sealing bead (2), thereby enhancing the efficiency for generating linearly acting surface pressures with respect to a displacement amount of height of the sealing bead (2). A peripheral portion of a sealing bead (2) between a bent position and an opening edge (1) is bent up or down so as to form a pre-determined degree of an angle with respect to a corresponding flange surface (6a,6b). With this structure, linearly acting surface pressures are generated at the opening edge that, in the conventional bead, does not directly contribute to generating linearly acting surface pressures.

## Description

### BACKGROUNG OF THE INVENTION

The present invention relates to sealing beads formed on metal sheets such as metal gaskets used for the cylinder head of internal combustion engines.

As known, while the opposing flange surfaces of machine parts are sealed by means of applying metal sheets like gaskets, their sealing ability essentially depends on sealing beads formed thereon. Sealing beads vary in shape depending upon the place on which to be disposed, the number of which to be required, and the condition of the flange surfaces under which to be applied.

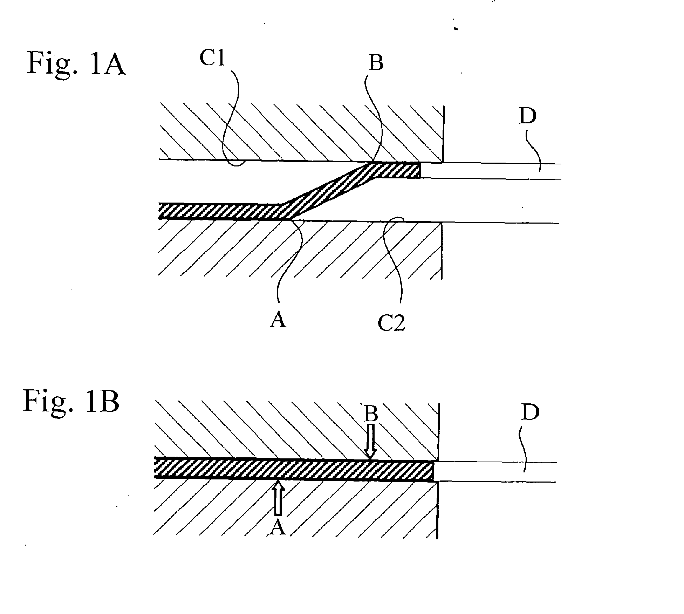

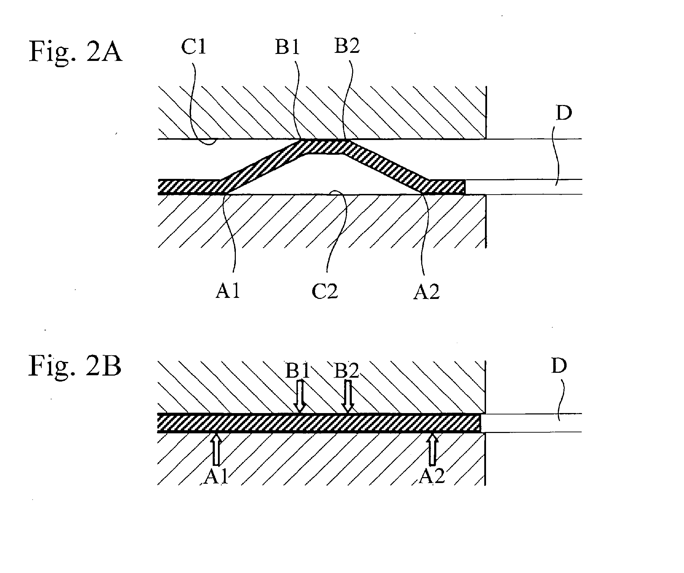

However, shape of the sealing beads is generally divided into two forms. For convenience of explanation, the conventional sealing beads will be described by referring to Figures 1A and 1B and Figures 2A and 2B. Figure 1A is a schematic cross section view of a conventional half sealing bead, illustrating the sealing bead not compressed. Figure 1B is a schematic cross section view of a conventional half sealing bead, illustrating the compressed sealing bead. Figure 2A is a schematic cross section view of a conventional full sealing bead, illustrating the sealing bead not compressed. Figure 2B is a schematic cross section view of a conventional full sealing bead, illustrating the compressed sealing bead.

One is, as shown in Figure 1A, the half sealing beads having one upward-bent position A and one downward-bent position B. The other is, as shown in Figures 2A, full sealing beads having two upward-bent positions A1 A2 and two downward-bent positions B1, B2. Referring to Figures 1B and 2B, while a sealing bead is mounted between opposing flange surfaces C1, C2, a linearly acting surface pressure is generated at the respective upward-bent positions A, A1, A2 and the respective downward-bent positions B, B1, B2, thereby sealing an opening D against fluid which passes through the opening D.

As the half sealing beads have a relatively low spring constant due to its shape, a large height-displacement amount is required to generate effective linearly acting surface pressure required for enough sealing. Thereby, it is difficult for the half sealing beads to generate linearly acting surface pressure efficiently with respect to the height-displacement amount of the sealing bead. On the other hand, as the full sealing beads have a relatively high spring constant, the effective linearly acting surface pressure required for enough sealing are obtained with relatively small height-displacement amount. However, as rigidity of the flange surfaces, fastening forces of the bolts, and the like is required to increase, efficiency for generating linearly acting surface pressure with respect to the height-displacement amount of the sealing bead is not always enhanced.

### SUMMARY OF THE INVENTION

An object of the present invention is to provide a sealing bead that generates linearly acting surface pressure at its positions whose corresponding positions of the conventional beads does not directly contribute to generating the linearly acting surface pressure, thereby enhancing efficiency for the generating with respect to the height-displacement amount the sealing bead.

First feature of the present invention is a sealing bead surrounding an opening formed on a metal sheet comprises a peripheral portion located between the opening edge of said opening and a bent position surrounding said opening edge. And the peripheral portion is bent up or down at a pre-determined degree of angle with respect to a corresponding flange surface.

Second feature of the present invention is a sealing bead according to the first feature, wherein the degree of the angle is determined so that a pre-determined amount of linearly acting surface pressure is generated at the opening edge while the sealing bead is mounted between opposing flange surfaces.

In the conventional sealing bead, the peripheral portion between the opening edge of the opening and the bent position surrounding the opening edge works only to support the bent position where linearly acting surface pressure is generated. In the present invention, however, as the peripheral portion is bent up or down at a pre-determined degree of angle with respect to a corresponding flange surface, the opening edge is press-contact with an opposing flange surface, to generate linearly acting surface pressure. Therefore, the sealing bead according to the present invention not only generates linearly acting surface pressure at the upward- or downward-bent position as in the conventional one, but also generates them at the opening edge, which does not directly contribute to generating linearly acting surface pressure in the conventional one. Thereby, its sealing effect improves.

The degree of the angle between the bent-up or bent-down peripheral portion of the sealing bead and the corresponding- flange surface is preferably determined so that a pre-determined amount of linearly acting surface pressure is generated at the opening edge when the sealing bead is mounted between the opposing flange surfaces.

### BRIEF DESCRIPTION OF THE DRAWINGS

The foregoing and other features of the present invention will become apparent to one skilled in the art to which the present invention relates upon consideration of the invention with reference to the accompanying drawings, wherein:
Figure 1A is a schematic cross section view of a conventional half sealing bead, illustrating the sealing bead not compressed;
Figure 1B is a schematic cross section view of a conventional half sealing bead, illustrating the compressed sealing bead;
Figure 2A is a schematic cross section view of a conventional full sealing bead, illustrating the sealing bead not compressed;
Figure 2B is a schematic cross section view of a conventional full sealing bead, illustrating the compressed sealing bead;
Figures 3A is a schematic cross section view of an embodiment of the present invention in the form of a full sealing bead, illustrating the full sealing bead not compressed;
Figures 3B is a schematic cross section view of an embodiment of- the present invention in the form of a full sealing bead, illustrating the compressed full sealing bead;
Figure 4A is a schematic cross section view of the same embodiment as Figure 3A in the form of a half sealing bead, illustrating the half sealing bead not compressed;
Figure 4B is a schematic cross section view of the same embodiment as Figure 3B in the form of the compressed half sealing bead, illustrating the compressed half sealing bead;
Figure 5A is a schematic cross section view of another embodiment of the present invention in the form of a full sealing bead, illustrating the full sealing bead not compressed;
Figure 5B is a schematic cross section view of another embodiment of the present invention in the form of the full sealing bead, illustrating the compressed full sealing bead;
Figure 6A is a schematic cross section view of the same embodiment in Figures 5A in the form of a half sealing bead, illustrating the half sealing bead not compressed;
Figure 6B is a schematic cross section view of the same embodiment in Figures 5B in the form of the half sealing bead, illustrating the compressed half sealing bead;
Figure 7 is an explanatory view of test pieces used for test of restoration characteristics against compression of the sealing bead;
Figure 8 shows test results of restoration characteristics against compression of the sealing bead of the embodiment of the invention; and
Figure 9 shows test results of restoration characteristics against compression of the sealing bead of the embodiment of the invention.

### DETAILED DESCRIPTION OF THE PREFERRED EMBODIMENTS

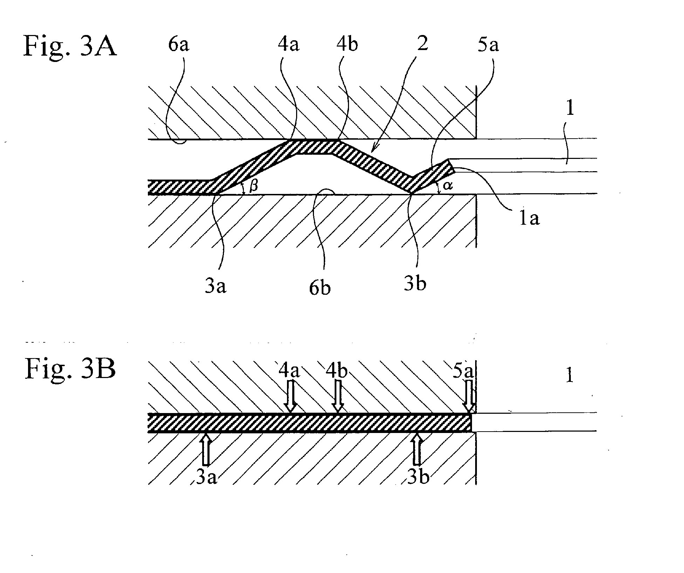

Referring to Figures 3A and 3B, at least one sealing bead 2 is formed on a metal sheet to surround an opening 1 formed therein, through which fluid flow. As in the conventional sealing bead, the sealing bead 2 has two upward-bent positions 3a, 3b and two downward-bent positions 4a, 4b. However, the sealing bead 2 differs in having a peripheral portion 5a bent up at the upward-bent position 3b at a pre-determined angle a α with respect to a flange surface 6B.

Still referring to Figures 3A and 3B, the degree of the angle α is determined so as to generate a pre-determined amount of linearly acting surface pressure at the opening edge 1a while the sealing bead 2 is mounted between the opposing flange surfaces 6a, 6b. The degree of the angle a also varies depending upon factors such as material and thickness of the metal gasket, size and shape of the flange surface to which the sealing bead is applied, and size and shape of the sealing bead. While not limiting the scope of the present invention, the degree of the angle α is generally equal to or larger than that of the angle β, which is formed at the upward-bent position 3a between a slanting surface 7 of the sealing bead 2 and the flange surface 6b.

Further referring to Figures 3A and 3B, the sealing bead 2 is mounted between the opposing flange surfaces 6a, 6b and fastened by a fastening bolt (not shown). Thereby, while generating linearly acting surface pressures at the upward-bent positions 3a, 3b and the downward-bent positions 4a, 4b as in the conventional sealing bead, the sealing bead 2 simultaneously generates linearly acting surface pressure at the opening edge 1a due to the peripheral portion 5a bent up at the angle α with respect to the flange surface 6b.

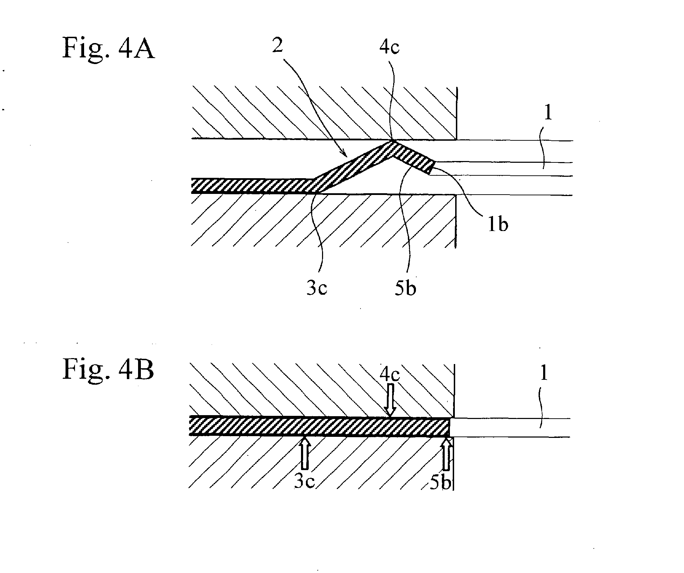

Referring to Figures 4A and 4B, showing the present invention in the form of a half sealing bead, a sealing bead 2 has a peripheral portion 5b bent up at an upward-bent position 4c, to generate linearly acting surface pressure at an opening edge 1b of the opening as well as at the upward-bent position 3c and the downward-bent position 4c.

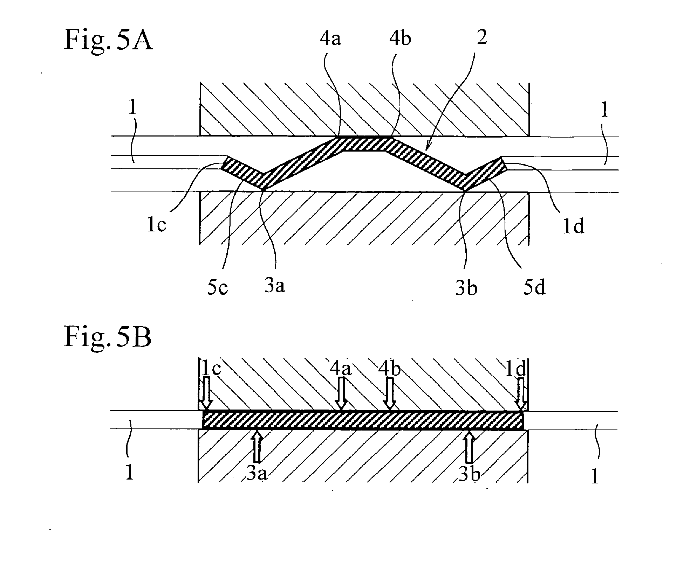

Figures 5A to 5B show another embodiment of the present invention applied to a flange surface, which is relatively narrow in area such as a cylinder head/block where plurality of bores are closely disposed with each other.

Referring to Figures 5A and 5B, which show still another embodiment in the form of a full sealing bead, a sealing bead 2- has periphera-l portions 5c, 5d, equivalent to the peripheral portion 5a in Fig.3. As the peripheral portions 5c, 5d are bent up at upward-bent positions 3a, 3b respectively, the sealing bead 2 generates linear loads not only at downward-bent positions 4a, 4b but also at inner edges 1c, 1d of respective openings 1, 1.

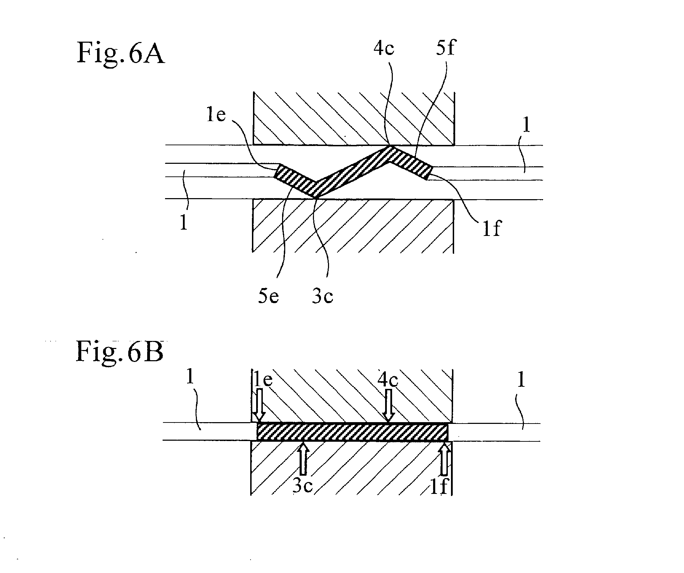

Referring to Figures 6A and 6B, which show another embodiment in the form of a half sealing bead, the sealing bead 2 has peripheral portions 5e, 5f equivalent to the peripheral portion 5b in Figures 4A and 4B. As the peripheral portion 5e is bent up at a upward-bent position 3c, and as the peripheral portion 5f is bent down at a downward-bent position 4c, a sealing bead 2 generates linearly acting surface pressure at opening edges 1e, 1f of respective openings 1, 1 as well as either at the upward-bent position 3c or at the downward-bent position 4c.

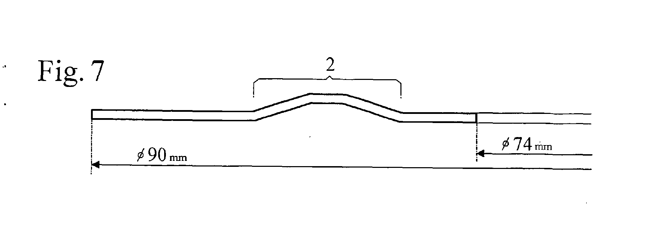

A comparative test is conducted to examine the sealing effect of the present invention. As shown in Figure 7, ring-like test pieces are arranged, which are made of SUS sheet metal with either 0.20mm or 0.25mm in thickness and are formed with the outer diameter of 90mm and the inner diameter of 74mm. Some of the test pieces are provided with a sealing bead of the present invention either in the form of full sealing bead in Fig.5 or in the form of half sealing bead in Fig.6. For comparative purposes, others are provided with a conventional sealing bead either in Figures 1A and 1B or Figures 2A and 2B.

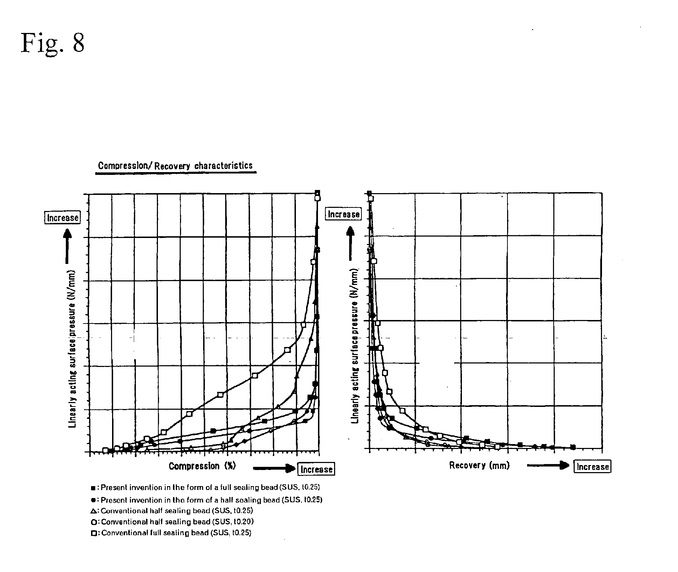

Each of the test pieces is repeatedly compressed so as to generate a linearly acting surface pressure of 2.94kN/cm. Thereby, compression/recovery characteristics both at the first compression and at n-th compression are evaluated on each test piece, and the result is shown in Figure 8.

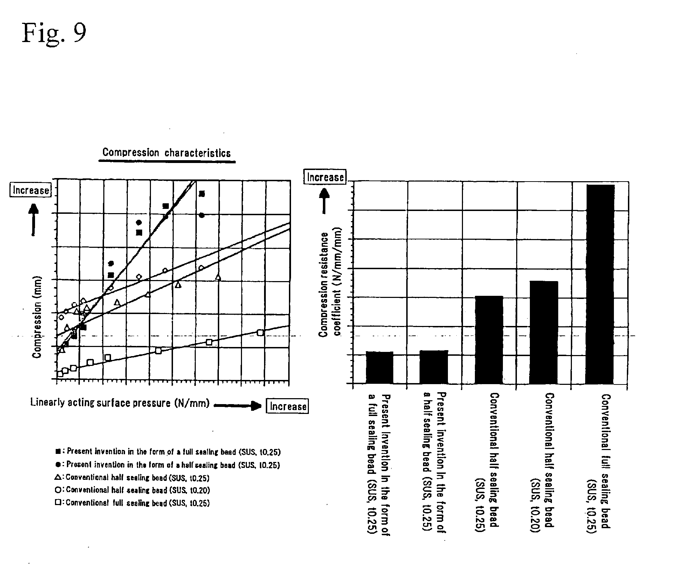

Generating amount of the linearly acting surface pressure with respect to the compression amount thereof and compression resistance coefficient of the sealing bead are calculated as shown in Figure 9.

The results clearly indicates that the sealing bead of the present invention is smaller than the conventional bead both in compression resistance and in variation of the linearly acting surface pressure with respect to the variation of the sealing bead compression amount. It means that pre-determined linearly acting surface pressures are maintained, thereby required sealing effect are maintained even if fastening forces of the bolts by which the sealing bead is mounted between the flange surfaces vary or change due to the passing of time.

From the above description of the invention, one skilled in the art will perceive improvements, changes and modifications. Such improvements, changes and modifications within the skill of the art are intended to be covered by the appended claims.

The entire disclosure of Japanese Patent Application No. 2002-170903 filed on June 12, 2002 including the specification, claims, drawings and summary is incorporated-herein-by reference in its entirety.

## Claims

1. A sealing bead surrounding an opening formed on a metal sheet, comprising:
a peripheral portion located between the opening edge of said opening and a bent position surrounding said opening edge, said peripheral portion bent up or down at a pre-determined degree of angle with respect to a corresponding flange surface.

2. A sealing bead according to claim 1, wherein the degree of said angle is determined so that a pre-determined amount of linearly acting surface pressure is generated at said opening edge while said sealing bead is mounted between opposing flange surfaces.
